# EUROPÄISCHE PATENTSCHRIFT

(11) **EP 1 143 629 B1**
(45) Veröffentlichungstag und Bekanntmachung des Hinweises auf die Patenterteilung: **28.02.2007**
(21) Anmeldenummer: 00107571.2
(22) Anmeldetag: 07.04.2000
(51) Int. Cl.: H04B 1/48, H04B 1/40

(54) **Frontendschaltung für Mobilfunk-Handgeräte**
Front end circuit for handheld mobile telephones
Circuit d'entrée pour téléphones mobiles a main

(43) Veröffentlichungstag der Anmeldung: 10.10.2001
(73) Patentinhaber: Infineon Technologies AG, 81669 München (DE)
(72) Erfinder: Heuermann, Holger, Dr.-Ing., 83607 Holzkirchen (DE); Kebinger, Herbert, Dipl.-Ing., 84453 Mühldorf (DE)
(74) Vertreter: Ginzel, Christian

(56) Entgegenhaltungen:
- US-A- 5 109 205
- US-A- 5 486 797
- US-A- 5 778 306
- PATENT ABSTRACTS OF JAPAN vol. 1998, no. 02, 30. Januar 1998 (1998-01-30) & JP 09 270732 A (KOKUSAI ELECTRIC CO LTD), 14. Oktober 1997 (1997-10-14)
- PATENT ABSTRACTS OF JAPAN vol. 010, no. 011 (E-374), 17. Januar 1986 (1986-01-17) & JP 60 174534 A (TOUYOU TSUUSHINKI KK), 7. September 1985 (1985-09-07)

## Beschreibung

Die Erfindung betrifft eine Frontendschaltung, insbesondere für Mobilfunk-Handgeräte mit mindestens einem Umschalter, der mindestens ein Mittel zum Auskoppeln von Sende- und Empfangssignalen, mindestens ein Mittel zur Frequenzselektion der Sende- und Empfangssignale und mindestens eine Hochfrequenzleitung mit einer elektrischen Länge von λ/4 aufweist.

Mobilfunk-Handgeräte erlangen in der heutigen Zeit eine immer größere Bedeutung. Damit man eine möglichst lange Betriebszeit und vor allem auch Sprechzeit erzielt, ist man sehr daran interessiert, daß möglichst viel Strom eingespart wird. Dies kann beispielsweise dadurch erreicht werden, daß die als Frontendschaltung bezeichnete Beschaltung in dem Mobilfunk-Handgerät zwischen einem Leistungsverstärker und einer Antenne möglichst wenig Verluste verursacht.

Häufig operieren Mobilfunk-Handgeräte in zwei Frequenzbereichen, zum Beispiel bei einem Frequenzband von 900 MHz im GSM-Betrieb (GSM = Global System for Mobile Communication) und bei dem Frequenzband von 1800 MHz im PCN-Betrieb (PCN = Personal Communication Network). Die Frontendschaltung für solche Mobilfunk-Handgeräte werden entweder häufig diskret (zweizügige Frontendschaltung) oder in einem Zug (einzügige Frontendschaltung) realisiert.

Die Frontendschaltung beinhaltet bei diesen Mobilfunk-Handgeräten in der Regel Filter, die nur für die Nutzfrequenzen durchgängig sind, Koppler, die einen kleinen Teil der vom Leistungsverstärker transmittierten Welle und unter Umständen ein kleinen Teil der an der Antenne reflektierten Welle auskoppeln, und einen TX/RX-Schalter, der entweder einen Verstärker mit einer Antenne verbindet (auf einem TX-Pfad), oder die Antenne zu den Empfängern durchschaltet (auf einem RX-Pfad).

Bekannte Frontendschaltungen operieren mit nur einem Verstärker und einem Frontendzug (also einer Verbindungseinheit zwischen Verstärker und Antenne) in den GSM- und PCN-Frequenzbändern. Solch eine einzügige Frontendschaltung ist allerdings nur recht aufwendig zu realisieren, da diese ein schaltbares Filter für die beiden Frequenzbänder benötigt. Weiterhin weisen solche Frontendschaltungen Einfügedämpfungen im Bereich zwischen 0,9 bis 1,5 dB für die TX-Pfade und 1,5 bis 2,5 dB für die RX-Pfade auf.

Bei anderen bekannten Frontendschaltungen existiert jeweils ein Frontendzug für das GSM- und PCN-Frequenzband. Hier können die Verstärker deutlich einfacher und mit besserem Wirkungsgrad realisiert werden als bei einer einzügigen Lösung. Allerdings weisen die Schaltelemente bekannter zweizügiger Frontendschaltungen jedoch im durchgeschalteten Zustand noch Widerstände >1 Ohm auf, wodurch Verluste bei der Datenübertragung relativ hoch sind. Weiterhin bestehen solche Frontendschaltungen typischerweise aus ca. 20 Bauelementen. Letztendlich treten für die RX- und TX-Pfade bei zweizügigen Frontendschaltungen jeweils ca. 1,5 bis 2,5 dB Einfügedämpfung auf.

Aus US 5,486,797 ist eine Auswahlschaltung mit einem variablen Frequenzfilter und einem Anschlußauswahlmittel bekannt. Das Anschlußauswahlmittel umfaßt eine λ/4-Leitung zwischen einem Antenneneingang bzw. -ausgang und einem Transmissionsport, die über einen Hochfrequenzschalter mit Masse verbunden ist. Eine weitere λ/4-Leitung ist zwischen Antenneneingang bzw. -ausgang und einem Empfangsport angeordnet, wobei diese λ/4-Leitung ebenfalls über einen Hochfrequenzschalter mit Masse verbunden ist. Das variable Frequenzfilter ist zwischen dem Anschlußauswahlmittel und dem Antenneneingang bzw. -ausgang angeordnet.

Es ist daher Aufgabe der Erfindung, eine Frontendschaltung zur Verfügung zu stellen, die es ermöglicht, die Einfügedämpfung der Sendepfade auf einfache und kostengünstige Weise drastisch zu reduzieren.

Diese Aufgabe wird durch die Merkmale des ersten Vorrichtungsanspruches gelöst.

Demgemäß schlagen die Erfinder vor, eine bekannte Frontendschaltung, insbesondere für Mobilfunk-Handgeräte, mit mindestens einem Umschalter, der mindestens ein Mittel zum Auskoppeln von Sende- und Empfangssignalen, mindestens ein Mittel zur Frequenzselektion der Sende- und Empfangssignale und mindestens eine Hochfrequenzleitung mit einer elektrischen Länge von λ/4 aufweist, weiterzuentwickeln. Die Verbesserung besteht darin, daß für mindestens eine Frequenz der mindestens eine Umschalter auf einer Leitung von einem Antenneneingang/ausgang zu einem Leistungsverstärker einen Koppler aufweist, wobei auf der Leitung zwischen Antenneneingang/-ausgang und Koppler eine erste λ/4-Hochfrequenzleitung, die direkt gegen Masse geschaltet ist, oder eine λ/2-Hochfrequenzleitung, die mit einem Leerlauf abgeschlossen ist, und zwischen dem Leistungsverstärker und dem Koppler mindestens eine zweite λ/4-Hochfrequenzleitung vorgesehen ist, die am Ende mit einem Kurzschluß oder Leerlauf abgeschlossen, und die in Reihe mit einem gegen Masse kontaktierten HF-Schalter geschaltet ist, sowie zwischen der ersten λ/4-Hochfrequenzleitung oder der λ/2-Hochfrequenzleitung und dem Antenneneingang/-ausgang eine Leitung zu einem RX-Ausgang mit mindestens einem in Reihe geschalteten zweiten HF-Schalter vorgesehen ist.

Die λ/4-Hochfrequenzleitungen, die am Ende mit einem Kurzschluß oder Leerlauf abgeschlossen sind (Schaltleitungen), werden als frequenzdiskreter Kurzschluß oder Leerlauf hoher Güte eingesetzt. Sie unterdrücken unerwünschte Oberwellen und wirken als Harmonischenfilter.

Solche Schaltleitungen können in Frontendschaltungen für schmalbandige Frequenzbereiche eingesetzt werden, die sich um einen Faktor größer 1,2 unterscheiden.

In einer vorteilhaften Weiterentwicklung ist zwischen dem Koppler und dem Leistungsverstärker eine weitere, zu der zweiten λ/4-Hochfrequenzleitung parallel geschaltete λ/4-Hochfrequenzleitung vorgesehen, die am Ende direkt gegen Masse kontaktiert ist. Diese Weiterentwicklung bewirkt, daß die Isolation der Frontendschaltung bei ungeraden Oberwellen erhöht wird.

Eine andere vorteilhafte Ausführung der Frontendschaltung sieht vor, daß zwischen dem zweiten HF-Schalter und dem RX-Ausgang eine Leitung abzweigt, die einen gegen Masse kontaktierten dritten HF-Schalter aufweist. Auch hierdurch wird erreicht, daß die Isolation der ungeraden Oberwellen verbessert wird sowie Oberwellen der HF-Schalter unterdrückt werden.

Weiterhin kann zwischen dem zweiten HF-Schalter und dem gegen Masse kontaktierten dritten HF-Schalter eine weitere λ/4-Hochfrequenzleitung vorgesehen sein, die eine weitere Verbesserung der Isolation der ungeraden Oberwellen sowie Unterdrückung der Oberwellen der HF-Schalter bewirkt.

Erfindungsgemäß ist der mindestens eine HF-Schalter als PIN-Diode, HEMT (HEMT = High Electron Mobility Transistor) und/oder MesFET (MesFET = Metall Semiconductor Feldeffekttransistor) ausgebildet.

Eine besonders vorteilhafte Weiterentwicklung der Frontendschaltung sieht vor, daß mindestens ein weiterer Umschalter, vorzugsweise für eine andere Frequenz, vorgesehen ist.

Darüber hinaus können die mindestens zwei Umschalter über ein Netzwerk auf den Antenneneingang/-ausgang zusammenlaufen. Hierdurch kann erreicht werden, daß beide Umschalter sich gegenseitig unterstützen, indem sie eine Unterdrückung von störenden Oberwellen bewirken.

Eine besondere Ausgestaltung der Frontendschaltung sieht vor, daß das Netzwerk einen Diplexer aufweist. Der Diplexer trennt beziehungsweise kombiniert, je nach Signalflußrichtung, die Signalpfade eines Senders und eines Empfängers frequenzselektiv. Dies ist eine schaltungstechnisch sehr einfache Ausgestaltung des Netzwerkes.

In einer anderen Variante weist das Netzwerk eine Frequenzweiche mit anschließendem Tiefpaßfilter auf. In dieser kostengünstigen Variante kann die Frequenzweiche aus mindestens einem Breitpaßfilter und/oder mindestens einem Hochpaßfilter und/oder mindestens einem Tiefpaßfilter realisiert sein.

Eine weitere vorteilhafte und sehr kostengünstige Weiterbildung sieht vor, daß das Netzwerk mindestens zwei Hochfrequenzleitungen, deren Längen auf mindestens eine der zu sendenden/empfangenden Frequenzen abgestimmt sind, aufweist. Das heißt, für ein Senden/Empfangen mit einer GSM-Frequenz sollten die λ/4-Hochfrequenzleitungen eine Länge aufweisen, die der PCN-Frequenz entspricht.

In einer bevorzugten Ausführung ist diesen, auf die Frequenzbänder abgestimmten, λ/4-Hochfrequenzleitungen ein Tiefpaßfilter nachgestellt.

In einer vorteilhaften Weiterentwicklung der erfindungsgemäßen Frontendschaltung ist zur Abstimmung mindestens eines Umschalters auf eine benachbarte Frequenz (Triple-Banderweiterung) mindestens ein weiterer HF-Schalter vorgesehen, der parallel zu dem in Reihe zu dem RX-Ausgang geschalteten zweiten HF-Schalter angeordnet wird. Die benachbarten Frequenzen können sich hierbei bis zu ±20% unterscheiden.

Zusätzlich zu den λ/4-Hochfrequenzleitungen, die zwischen den Umschaltern und dem Antenneneingang/-ausgang verlaufen, können nach diesen λ/4 -Hochfrequenzleitungen PIN-Dioden als TX-Schalter eingebracht werden, die einen sehr geringen Ron-Widerstand (On-Widerstand der PIN-Diode) und folglich eine große Sperrkapazität aufweisen. In vorteilhafter Weise ist diese Kombination aus PIN-Dioden und λ/4-Hochfrequenzleitungen deutlich breitbandiger als dies im Stand der Technik bekannt ist und läßt somit die Triple-Banderweiterung ohne Performanceeinbuße zu.

Weitere Merkmale der Erfindung ergeben sich aus der nachfolgenden Beschreibung mehrerer Ausführungsbeispiele unter Bezugnahme auf die Zeichnungen. Es zeigen:
- Figur 1:: ein Blockschaltbild einer bekannten einzügigen Frontendschaltung für zwei Frequenzbereiche;
- Figur 2:: ein Blockschaltbild der erfindungsgemäßen zweizügigen Frontendschaltung für zwei Frequenzbereiche;
- Figur 3:: einen Aufbau der erfindungsgemäßen zweizügigen Frontendschaltung für zwei Frequenzbereiche;
- Figur 4:: einen Aufbau eines bevorzugten Ausführungsbeispieles der erfindungsgemäßen zweizügigen Frontendschaltung für zwei Frequenzbereiche;
- Figur 5:: einen Aufbau der erfindungsgemäßen zweizügigen Frontendschaltung für drei Frequenzbereiche.

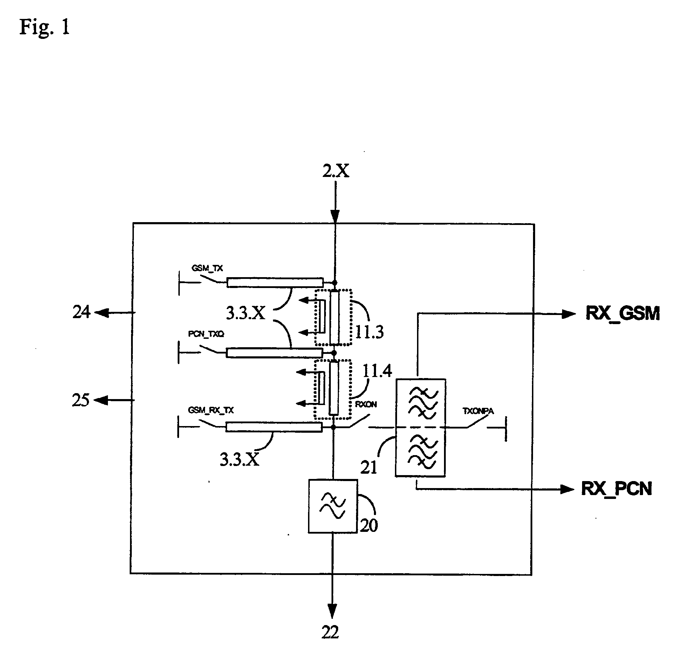

Die Figur 1 zeigt eine bekannte Frontendschaltung für ein Mobilfunkgerät, das für zwei Frequenzbereiche (hier: GSM- und PCN-Frequenz, also 900 und 1800 MHz) arbeitet. Diese Frontendschaltung enthält zwei Koppler 11.3 und 11.4, die auf einem Transmissionspfad (TX-Pfad), von einem Leistungsverstärker 2.X zu einer Antenne 22, angeordnet sind, drei λ/4-Hochfrequenzleitungen 3.3.X, die vor, zwischen und nach den beiden Kopplern 11.3 und 11.4 von dem Transmissionspfad abzweigen und die jeweils einen HF-Schalter (GSM_TX, PCN_TX, GSM_RX_TX) aufweisen. Weiterhin enthält die Frontendschaltung eine Filteranordnung 20 auf dem TX-Pfad vor einem Schaltungsausgang. Auf dem Transmissionspfad befindet sich also kein Schaltelement.

Weiterhin enthält die bekannte Frontendschaltung auf einem Empfangspfad eine weitere Filteranordnung 21, wobei ein HF-Schalter (RXON) vor und ein weiterer HF-Schalter (TXONPA) nach dieser Filteranordnung 21 angeordnet sind. Die Filteranordnung 21 trennt nun die jeweiligen Empfangsfrequenzen auf zwei Empfangspfade (RX_GSM, RX_PCN) auf.

Zum Senden von Signalen ist der RXON-Schalter geöffnet. Zum Senden auf der GSM-Arbeitsfrequenz sind sämtliche anderen Schalter geschlossen, für PCN-Arbeitsfrequenzen nur der Isolationsschalter TXONPA. Die λ/4-Hochfrequenzleitungen 3.3.X realisieren somit für die Arbeitsfrequenz einen Leerlauf und für die doppelte Frequenz, im GSM-Betrieb, einen Kurzschluß, wodurch ein sehr steiles Harmonischenfilter realisiert wird.

Für den Signalempfang werden mittels der λ/4-Hochfrequenzleitungen 3.3.X Leerläufe auf den Eingangspunkt des RXON-Schalters transformiert, die erlauben, daß nahezu die gesamte Energie auf die RX-Pfade übertragen wird.

Diese bekannte Schaltung weist Einfügedämpfungen von 0,9 dB auf dem TX-GSM-Pfad, 1,5 dB auf dem TX-PCN-Pfad und 1,5 bis 2,5 dB für die RX-Pfade auf.

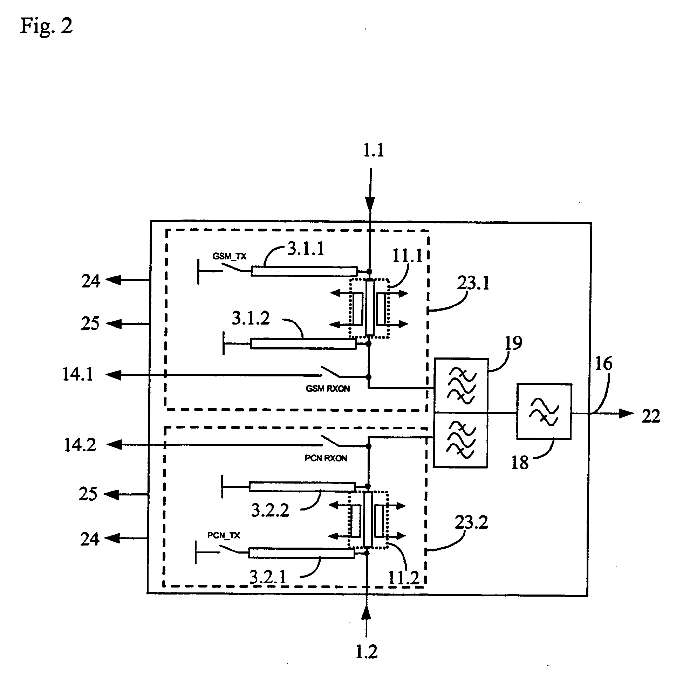

In den Figuren 1 und 2 sind Kopplerausgänge Forward und Backward durch die Bezugszeichen 24 und 25 dargestellt, wobei deren interne Verbindung aus Gründen der Übersicht nicht gezeigt ist.

Die Figur 2 zeigt ein Blockschaltbild der erfindungsgemäßen Frontendschaltung. Hierbei gelangt man bei fast gleicher Anzahl der Bauteile zu wesentlich verbesserten elektrischen Eigenschaften, als bei der bekannten einzügigen Frontendlösung aus der Figur 1.

Die Schaltungsanordung enthält in diesem Ausführungsbeispiel zwei zueinander symmetrisch angeordnete Umschalter 23.1 und 23.2 (Teilschaltungen), die über eine Frequenzweiche 19 und ein anschließendes Tiefpaßfilter 18 zu einem Antenneneingang/-ausgang 16 zusammengeführt werden. Die obere Teilschaltung ist auf die GSM-Frequenz (900 MHz), die untere auf die PCN-Frequenz (1800 MHz) ausgelegt.

Jede der Teilschaltungen 23.X enthält auf dem TX-Pfad (Sendepfad) jeweils einen Koppler 11.X, sowie vor und nach dem Koppler 11.X je eine Hochfrequenzleitung 3.X.1 und 3.X.2, die bei den jeweiligen Betriebsfrequenzen λ/4 sind. Die λ/4-Hochfrequenzleitungen 3.X.1 tragen jeweils einen Schalter (GSM_TX, PCN_TX), der gegen Masse kontaktiert ist, die λ/4-Hochfrequenzleitungen 3.X.2 sind am Ende mit einem Leerlauf oder Kurzschluß abgeschlossen.

Von einer Antenne 22 eingehende Signale werden über die Frequenzweiche 19 auf den jeweiligen Empfangspfaden den Ausgängen 14.X, also im Falle einer GSM-Frequenz dem GSM-RX-Ausgang 14.1, und im Falle einer PCN-Frequenz, dem PCN-RX-Ausgang 14.2, zugeleitet. Die Empfangspfade enthalten jeweils einen HF-Schalter (GSMRXON, PCNRXON), der im Empfangsfall geschlossen und im Sendefall, wie hier gezeigt, geöffnet ist.

Die Funktionsweise jeder einzelnen Teilschaltung 23.X entspricht der Funktionsweise der in der Figur 1 dargestellten einzügigen Frontendschaltung. Da die Funktionsweise hier durch weniger HF-Schalter an den Enden der λ/4-Hochfrequenzleitungen 3.X.X in dem TX-Pfad und kürzere Leitungen (PCN um Faktor 2) erreicht wird, sind die Einfügedämpfungen der TX-Pfade gegenüber der einzügigen Lösung deutlich reduziert. Da die einzügige Lösung bereits eine, um einen Faktor 2 geringere Einfügedämpfung aufweist als bekannte zweizügige Lösungen, ist die vorliegende Erfindung ein großer Innovationsschritt.

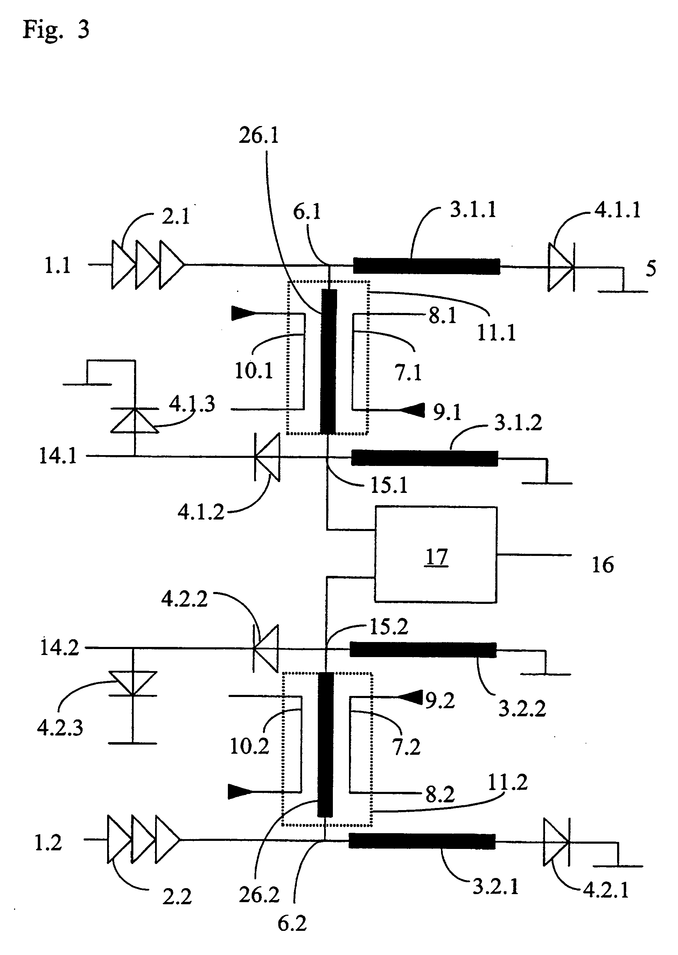

Die Figur 3 zeigt einen schematischen Aufbau der erfindungsgemäßen Frontendschaltung. Analog zu dem in der Figur 2 gezeigten Ausführungsbeispiel, wird die obere Teilschaltung auf die GSM-Frequenz von 900 MHz und die untere Teilschaltung auf die PCN-Frequenz von 1800 MHz ausgelegt.

Bei einem Versenden von Signalen auf der GSM-Frequenz (GSM-TX-Fall) liegt das 900 MHz-Signal am Eingang 1.1 eines mehrstufigen Leistungsverstärkers 2.1 an und wird von diesem an die Verzweigung 6.1 (GSM-Eingang der Frontendschaltung) gegeben. Hierbei ist eine Diode 4.1.1 leitend, wodurch ein Kurzschluß eines Punktes 5 über eine λ/4-Hochfrequenzleitung 3.1.1 in einem Leerlauf zu der Verzweigung 6.1 transformiert wird. Genau die gleiche Funktion hat die λ/4-Hochfrequenzleitung 3.1.2. Beide Leitungen 3.1.1 und 3.1.2 beeinflussen die Transmission des 900 MHz-Signales nahezu gar nicht. Hingegen schließen beide Leitungen 3.1.1 und 3.1.2 über eine λ/2-Transformation der Kurzschlüsse die doppelte Frequenz kurz und bieten somit eine sehr gute Filterung der ersten und aller weiteren ungeraden Oberwellen.

Der zwischen den Verzweigungen 6.1 und 15.1 eingebrachte Koppler 11.1 koppelt, in der dargestellten Bauart, mit einer Koppelschleife 7.1 ein Signal am Punkt 8.1, für die von dem Leistungsverstärker 2.1 kommenden Welle, und mit der Koppelschleife 10.1, ein an der Antenne reflektiertes Signal, aus. Anstelle der zwei Koppelschleifen 7.1 und 10.1, genügt auch eine einzige, wobei das reflektierte Signal am Punkt 9.1 ausgekoppelt wird und den dort illustrierten Wellensumpf (dargestellt als Spitze des Dreiecks) ersetzt. In diesem Fall werden jedoch erhöhte Ansprüche an nachgeschlossene Detektoren bezüglich ihrer Eingangsanpassung gestellt. Eine weitere Kopplervariante beziehungsweise ein weiteres Regelkonzept ist darin zu finden, daß nur die hinlaufende Welle ausgekoppelt wird. In diesem Falle würde die Koppelschleife 10.1 entfallen und die Koppelschleife 7.1 wäre unverändert.

Weiterhin ist im GSM-TX-Fall die Diode 4.1.2 im gesperrten und die Isolationsdiode 4.1.3 im leitenden Zustand. Zur Verminderung derer Verluste kann eine weitere λ/4-Hochfrequenzleitung zwischen die beiden Dioden geschaltet werden (hier nicht gezeigt). Somit wird der Kurzschluß der Diode 4.1.3 in einem Leerlauf als Abschluß der Diode 4.1.2 transformiert, welcher in Addition mit den Isolationswerten der Diode 4.1.2 die Leerlaufeigenschaften an der Verzweigung 15.1 deutlich steigert.

Von dieser Verzweigung 15.1 gelangt das zu sendende Signal über das, im weiteren noch genauer diskutierte Netzwerk 17, verlustarm an den Antenneneingang/-ausgang 16.

Bei einem Empfang von Signalen auf der GSM-Frequenz (GSM-RX-Fall) gelangt das von der Antenne aufgenommene Signal verlustarm von dem Antenneneingang/-ausgang 16 zu der Verzweigung 15.1. Über der λ/4-Hochfrequenzleitung 3.1.2 wird der Kurzschluß zum Leerlauf transformiert und belastet somit das Empfangssignal an dem Verzweigungspunkt 15.1 nur minimal. Die Diode 4.1.1 ist nunmehr im offenen Zustand. Dadurch wird über die λ/4-Hochfrequenzleitung 3.1.1 ein Kurzschluß an der Verzweigung 6.1 erzeugt. Dieser wird wiederum über die Kopplerleitung 26.1, die auch λ/4 lang ist, zum Verzweigungspunkt 15.1 in ein Leerlauf transformiert und belastet folglich das Empfangssignal nur geringfügig. Nahezu die gesamte Empfangsleistung wird über die leitenden Diode 4.1.2, vorbei an der sperrenden Diode 4.1.3, zu dem GSM-RX-Ausgang 14.1 geleitet.

Das Senden und der Empfang von Signalen auf der PCN-Frequenz läßt sich analog zu den GSM-Fällen betrachten.

Die Konstruktion des Netzwerkes 17 kann in mehreren Ausführungen erfolgen. Im einfachsten Fall wird ein Diplexer eingesetzt.

Schaltungstechnisch aufwendiger, aber eventuell kostengünstiger, ist eine diskret aufgebaute Frequenzweiche mit anschließendem Tiefpaßfilter, wie es in Fig.2 dargestellt wird.

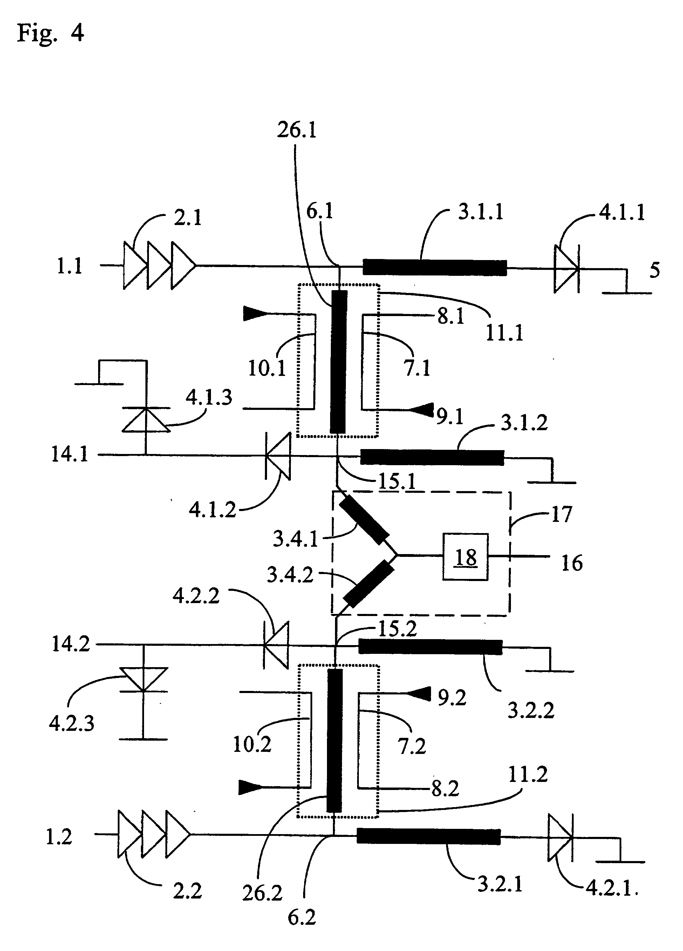

Die Figur 4 zeigt ein bevorzugtes Ausführungsbeispiel der erfindungsgemäßen Frontendschaltung, wobei für den Aufbau des Netzwerkes 17 eine weitere sehr kostengünstige Lösung erreicht wird. Hierbei werden zwei λ/4-Hochfrequenzleitungen 3.4.1 und 3.4.2 eingesetzt, die auf die PCN-Frequenz abgestimmt sind (PCN-λ/4-Hochfrequenzleitungen), gefolgt von einem Tiefpaßfilter 18. Der Tiefpaßfilter 18 kann hierbei auch entfallen. Die Leitung 3.4.1 ist zwischen dem Verzweigungspunkt 15.1 und dem Antenneneingang/-ausgang 16 angebracht, die andere Leitung 3.4.2 verbindet den Verzweigungspunkt 15.2 und den Antenneneingang/-ausgang 16. Das Tiefpaßfilter 18 ist mit dem Antenneneingang/-ausgang 16 in Serie geschaltet. Die Kombination von den λ/4-Hochfrequenzleitungen 3.4.X und dem Tiefpaßfilter 18, soll im weiteren als In-Diplexer bezeichnet werden, da sie bereits die vorhandenen λ/4-Hochfrequenzleitungen 3.1.2 und 3.2.2 für die Diplexerrealisierung ausnutzt.

Für eine Übertragung von GSM-Frequenzen (900 MHz) sowohl im Sende- als auch im Empfangsfall, sperrt die Diode 4.2.2 und die Diode 4.2.1 ist durchgeschaltet. Folglich wird für die GSM-Frequenz der Kurzschluß der Diode 4.2.1 über die Hochfrequenzleitung 3.2.1 und den PCN-Koppler 11.2 zu einem Leerlauf in dem Verzweigungspunkt 15.2 transformiert und absorbiert dort nahezu keine Energie. Der Kurzschluß der Hochfrequenzleitung 3.2.2 wird über die PCN-λ/4-Hochfrequenzleitung 3.4.2 zu einem Leerlauf in den Antenneneingang/-ausgang 16 transformiert. Folglich wird der Großteil der Energie zwischen dem Verzweigungspunkt 15.1 und dem Antenneneingang/-ausgang 16 transportiert.

Für die PCN-Fälle (1800 MHz) sperrt die Diode 4.1.2 und die Diode 4.1.1 ist durchgeschaltet. Folglich wird für die PCN-Frequenz der Kurzschluß der Diode 4.1.1 über die λ/4-Hochfrequenzleitung 3.1.1 in einem Kurzschluß im Verzweigungspunkt 6.1 transformiert. Dieser wiederum wird über den GSM-Koppler 11.1 zu einem Kurzschluß in den Verzweigungspunkt 15.1 transformiert. Genauso wird über der Schaltleitung 3.1.2 der feste Kurzschluß zu einem Kurzschluß in dem Verzweigungspunkt 15.1 transformiert. Dieser relativ niederohmige Hochfrequenzkurzschluß des Verzweigungspunktes 15.1 wird über die PCN-λ/4-Hochfrequenzleitung 3.4.1 in einem sehr guten Leerlauf zu dem Antenneneingang/-ausgang 16 transformiert. Somit wird der Großteil der Energie zwischen dem Verzweigungspunkt 15.2 und dem Antenneneingang/-ausgang 16 transportiert.

Möchte man die In-Diplexerverluste des GSM-Betriebes genauso gering halten, wie sie bei dem PCN-Betrieb sind, dann kann man den idealen Kurzschluß der Schaltleitung 3.2.2 durch eine weitere PCN-λ/4-Hochfrequenzleitung verlängern (es entsteht also eine λ/2-Hochfrequenzleitung), die am Ende leerläuft. Des weiteren sollte die λ/4-Hochfrequenzleitung 3.4.2 zwischen dem Ausgang 16 und dem Verzweigungspunkt 15.2 für die GSM-Frequenz λ/4 sein. Somit wird über der λ/2-Hochfrequenzleitung ein Kurzschluß zu Punkt 15.2 transformiert. Genauso sollte die Diode 4.2.1 leerlaufend sein, damit über diesem Leerlauf ein weiterer Kurzschluß zum Punkt 15.2 transformiert wird. Dieser sehr gute HF-Kurzschluß des Verzweigungspunktes 15.2 wird über die Leitung zwischen dem Antenneneingang/-ausgang 16 und dem Verzweigungspunkt 15.2 zum Antennenausgang 16 in einem sehr guten HF-Leerlauf transformiert.

Anstatt der PIN-Dioden lassen sich auch sonstige HF-Schalter wie beispielsweise MesFET's einsetzen.

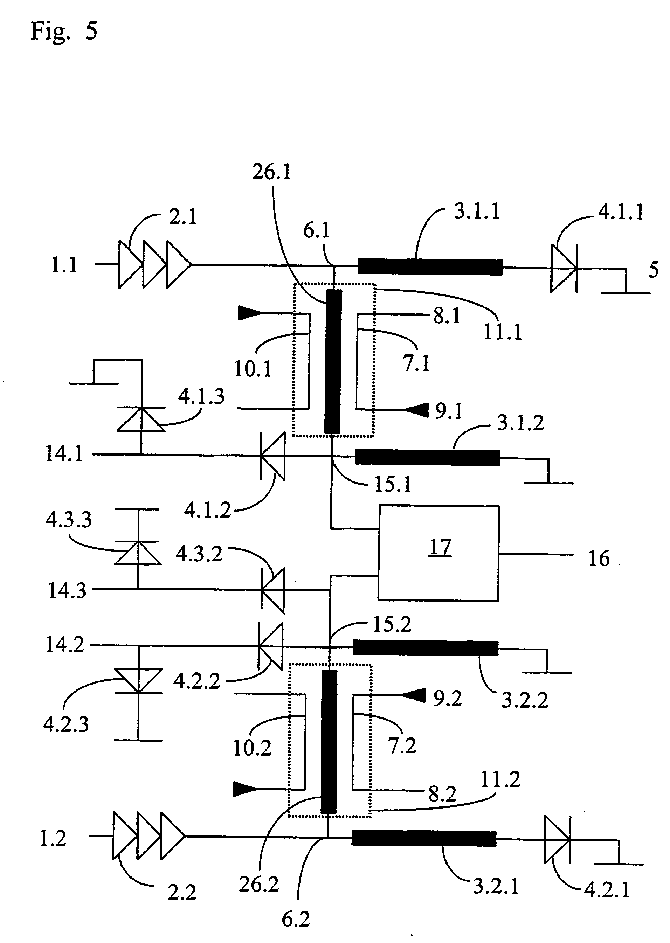

Die Figur 5 zeigt eine Erweiterung der Frontendschaltung aus der Figur 3 auf drei Frequenzkanäle. Dieses Konzept ist auch auf weitere Kanäle erweiterbar.

Aufgrund der prinzipiellen recht großen Breitbandigkeit dieser Schaltung genügt es, für eine Triple-Banderweiterung, ein zweites Diodenpärchen 4.3.2 und 4.3.3 für die selektive Auskopplung zum Beispiel der 1800 MHz und 1900 MHz Empfangssignale parallel zu 4.2.2 und 4.2.3 zu schalten.

Bei der Inkaufnahme von etwas höheren TX-Verlusten und geringerer TX/RX-Isolation, lassen sich die Isolationsdioden 4.1.3, 4.2.3 und 4.3.3 entfernen.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird eine erfindungsgemäße Frontendschaltung entwickelt, die es ermöglicht, die Einfügedämpfung der Sendepfade auf kostengünstige Weise drastisch zu reduzieren.

### Bezugszeichenliste

- 1.X: Eingang des Leistungsverstärkers 2.X
- 2.X: Leistungsverstärker
- 3.X.X: λ/4-Hochfrequenzleitung
- 4.X.X: Diode
- 5: Punkt
- 6.X: Verzweigung
- 7.X: Koppelschleife
- 8.X: Punkt
- 9.X: Punkt
- 10.X: Koppelschleife
- 11.X: Koppler
- 14.1: GSM-RX-Ausgang
- 14.2: PCN-RX-Ausgang
- 15.X: Verzweigung
- 16: Antenneneingang/-ausgang
- 17: Netzwerk
- 18: Tiefpaßfilter
- 19: Frequenzweiche
- 20: Filteranordnung
- 21: Filteranordnung
- 22: Antenne
- 23.X: Umschalter
- 24: Forward
- 25: Backward
- 26.X: Kopplerleitung

## Patentansprüche

1. Frontendschaltung, insbesondere für Mobilfunk-Handgeräte mit mindestens einem Umschalter (23.X), der mindestens ein Mittel zum Auskoppeln von Sende- und Empfangssignalen, mindestens ein Mittel zur Frequenzselektion der Sende- und Empfangssignale und mindestens eine Hochfrequenzleitung mit einer elektrischen Länge von λ/4 aufweist, wobei der mindestens eine Umschalter (23.X) auf einer Leitung von einem Antenneneingang/-ausgang (16) zu einem Leistungsverstärker (2.X) einen Koppler (11.X) aufweist, wobei auf der Leitung zwischen Antenneneingang/-ausgang (16) und Koppler (11.X) eine λ/4-Hochfrequenzleitung (3.X.2), die direkt gegen Masse geschaltet ist, oder eine λ/2-Hochfrequenzleitung, die mit einem Leerlauf abgeschlossen ist, und zwischen dem Leistungsverstärker (2.X) und dem Koppler (11.X) mindestens eine λ/4-Hochfrequenzleitung (3.X.1) vorgesehen ist, die am Ende mit einem Kurzschluß oder Leerlauf abgeschlossen, und die in Reihe mit einem gegen Masse kontaktierten HF-Schalter (4.X.1) geschaltet ist, sowie zwischen der λ/4-Hochfrequenzleitung (3.X.2) oder der λ/2-Hochfrequenzleitung und dem Antenneneingang/-ausgang (16) eine Leitung zu einem RX-Ausgang (14.X) mit mindestens einem in Reihe geschalteten HF-Schalter (4.X.2) vorgesehen ist.

2. Frontendschaltung gemäß dem voranstehenden Anspruch 1, **dadurch gekennzeichnet, daß** zwischen dem Koppler (11.X) und dem Leistungsverstärker (2.X) eine weitere zu der λ/4-Hochfrequenzleitung (3.X.1) parallel geschaltete λ/4-Hochfrequenzleitung vorgesehen ist, die am Ende direkt gegen Masse kontaktiert ist.

3. Frontendschaltung gemäß dem voranstehenden Anspruch 2, **dadurch gekennzeichnet, daß** zwischen dem HF-Schalter (4.X.2) und dem RX-Ausgang (14.X) eine Leitung abzweigt, die einen gegen Masse kontaktierten HF-Schalter (4.X.3) aufweist.

4. Frontendschaltung gemäß dem voranstehenden Anspruch 3, **dadurch gekennzeichnet, daß** zwischen dem HF-Schalter (4.X.2) und dem gegen Masse kontaktierten HF-Schalter (4.X.3) eine weitere λ/4-Hochfrequenzleitung vorgesehen ist.

5. Frontendschaltung gemäß einem der voranstehenden Ansprüche 1 bis 4, **dadurch gekennzeichnet, daß** der mindestens eine HF-Schalter (4.X.X) als PIN-Diode und/oder HEMT und/oder MesFET ausgebildet ist.

6. Frontendschaltung gemäß einem der voranstehenden Ansprüche 1 bis 5, **dadurch gekennzeichnet, daß** mindestens ein weiterer Umschalter (23.X), vorzugsweise für eine andere Frequenz, vorgesehen ist.

7. Frontendschaltung gemäß dem voranstehenden Anspruch 6, **dadurch gekennzeichnet, daß** die mindestens zwei Umschalter (23.X) über ein Netzwerk (17) auf den Antenneneingang/-ausgang (16) zusammenlaufen.

8. Frontendschaltung gemäß dem voranstehenden Anspruch 7, **dadurch gekennzeichnet, daß** das Netzwerk (17) einen Diplexer aufweist.

9. Schaltungsanordung gemäß einem der voranstehenden Ansprüche 7 bis 8, **dadurch gekennzeichnet, daß** das Netzwerk (17) eine Frequenzweiche (19) mit anschließendem Tiefpaßfilter (18) aufweist.

10. Frontendschaltung gemäß dem voranstehenden Anspruch 9, **dadurch gekennzeichnet, daß** die Frequenzweiche (19) mindestens einen Breitpaßfilter und/oder mindestens einen Hochpaßfilter und/oder mindestens einen Tiefpaßfilter (18) aufweist.

11. Schaltungsanordung gemäß einem der voranstehenden Ansprüche 7 bis 10, **dadurch gekennzeichnet, daß** das Netzwerk (17) mindestens zwei λ/4-Hochfrequenzleitungen (3.4.X), deren Längen auf mindestens eine der zu sendenden/empfangenden Frequenzen abgestimmt sind, aufweist.

12. Frontendschaltung gemäß dem voranstehenden Anspruch 11, **dadurch gekennzeichnet, daß** den λ/4-Hochfrequenzleitungen (3.4.X) ein Tiefpaßfilter (18) nachgestellt ist.

13. Frontendschaltung gemäß einem der voranstehenden Ansprüche1 bis 12, **dadurch gekennzeichnet, daß** zur Abstimmung mindestens eines Umschalters (23.X) auf eine benachbarte Frequenz mindestens ein weiterer HF-Schalter (4.3.X) vorgesehen ist, der parallel zu dem HF-Schalter (4.X.2) geschaltet wird.

## Claims

1. Front-end circuit, particularly for mobile radio handsets having at least one change-over switch (23.X) which has at least one means for coupling out transmit and receive signals, at least one means for selecting the frequency of the transmit and receive signals and at least one radio-frequency line with an electrical length of λ/4, wherein the at least one change-over switch (23.X) has on a line from an antenna input/output (16) to a power amplifier (2.X) a coupler (11.X), wherein on the line between antenna input/output (16) and coupler (11.X), a λ/4 radio-frequency line (3.X.2), which is connected directly to earth, or a λ/2 radio-frequency line which is terminated with an open circuit, and between the power amplifier (2.X) and the coupler (11.X) at least one λ/4 radio-frequency line (3.X.1) is provided which is terminated with a short circuit or open circuit at the end and which is connected in series with an RF switch (4.X.1) connected to earth, and between the λ/4 radio-frequency line (3.X.2) or the λ/2 radio-frequency line and the antenna input/output (16), a line to an RX output (14.X) is provided with at least one series-connected RF switch (4.X.2).

2. Front-end circuit according to the preceding Claim 1, **characterized in that** between the coupler (11.X) and the power amplifier (2.X), a further λ/4 radio-frequency line connected in parallel with the λ/4 radio-frequency line (3.X.1) is provided which is connected directly to earth at the end.

3. Front-end circuit according to the preceding Claim 2, **characterized in that** between the RF switch (4.X.2) and the RX output (14.X), a line branches off which has an RF switch (4.X.3) connected to earth.

4. Front-end circuit according to the preceding Claim 3, **characterized in that** between the RF switch (4.X.2) and the RF switch (4.X.3) connected to earth, a further λ/4 radio-frequency line is provided.

5. Front-end circuit according to one of the preceding Claims 1 to 4, **characterized in that** the at least one RF switch (4.X.X) is constructed as PIN diode and/or HEMT and/or MesFET.

6. Front-end circuit according to one of the preceding Claims 1 to 5, **characterized in that** at least one further change-over switch (23.X), preferably for another frequency, is provided.

7. Front-end circuit according to the preceding Claim 6, **characterized in that** the at least two change-over switches (23.X) come together to the antenna input/output (16) via a network (17).

8. Front-end circuit according to the preceding Claim 7, **characterized in that** the network (17) has a diplexer.

9. Circuit arrangement according to one of the preceding Claims 7 to 8, **characterized in that** the network (17) has a diplexer (19) followed by a low-pass filter (18).

10. Front-end circuit according to the preceding Claim 9, **characterized in that** the diplexer (19) has at least one wide-pass filter and/or at least one high-pass filter and/or at least one low-pass filter (18).

11. Circuit arrangement according to one of the preceding Claims 7 to 10, **characterized in that** the network (17) has at least two λ/4 radio-frequency lines (3.4.X), the lengths of which are tuned to at least one of the frequencies to be transmitted/received.

12. Front-end circuit according to the preceding Claim 11, **characterized in that** the λ/4 radio-frequency lines (3.4.X) are followed by a low-pass filter (18).

13. Front-end circuit according to one of the preceding Claims 1 to 12, **characterized in that**, for tuning at least one change-over switch (23.X) to an adjacent frequency, at least one further RF switch (4.3.X) is provided which is connected in parallel with the RF switch (4.X.2).

## Revendications

1. Circuit d'entrée, notamment pour téléphone mobile à main, comportant au moins un commutateur (23.X) qui comporte au moins un moyen de découplage de signaux d'émission et de réception, au moins un moyen de sélection de la fréquence des signaux d'émission et de réception et au moins une ligne à haute fréquence d'une longueur électrique de λ/4, l'au moins un commutateur (23.X) comportant un coupleur (11.X) sur une ligne allant d'une entrée/sortie d'antenne (16) à un amplificateur de puissance (2.X), une ligne à haute fréquence λ/4 (3.X.2) qui est raccordée directement à la masse ou bien une ligne à haute fréquence λ/2 qui est isolée en circuit ouvert étant prévue sur la ligne entre l'entrée/sortie d'antenne (16) et le coupleur (11.X) et au moins une ligne à haute fréquence λ/4 (3.X.1) dont l'extrémité est en court-circuit ou isolée en circuit ouvert et qui est montée en série avec un circuit (4.X.1) en contact avec la masse, étant prévue entre l'amplificateur de puissance (2.X) et le coupleur (11.X.) ainsi qu'une ligne menant à une sortie RX (14.X), comportant au moins un circuit HF (4.X.2) monté en série, étant prévue entre la ligne à haute fréquence λ/4 (3.X.2) ou la ligne à haute fréquence λ/2 et l'entrée/sortie d'antenne (16).

2. Circuit d'entrée selon la revendication précédente 1, **caractérisé en ce qu'**il est prévu, entre le coupleur (11.X) et l'amplificateur de puissance (2.X), une autre ligne à haute fréquence λ/4 qui est montée en parallèle avec la ligne à haute fréquence λ/4 (3.X.1) et dont l'extrémité est directement contact avec la masse.

3. Circuit d'entrée selon la revendication précédente 2, **caractérisé en ce qu'**une ligne, qui comporte un circuit HF (4.X.3) en contact avec la masse, est branchée entre le circuit (4.X.2) et la sortie RX (14.X).

4. Le circuit d'entrée selon la revendication précédente 3, **caractérisé en ce qu'**une autre ligne à haute fréquence λ/4 est prévue entre le circuit HF (4.X.2) et le circuit HF (4.X.3) en contact avec la masse.

5. Circuit d'entrée selon l'une des revendications précédentes 1 à 4, **caractérisé en ce que** l'au moins un circuit HF (4.X.X) est conformé en diode PIN et/ou en HEMT et/ou en MesFET.

6. Circuit d'entrée selon l'une des revendications précédentes 1 à 5, **caractérisé en ce qu'**au moins un autre commutateur (23.X) est avantageusement prévu pour une autre fréquence.

7. Circuit d'entrée selon la revendication précédente 6, **caractérisé en ce que** les au moins deux commutateurs (23.X) sont accouplés à l'entrée/sortie d'antenne (16) par le biais d'un réseau (17).

8. Circuit d'entrée selon la revendication précédente 7, **caractérisé en ce que** le réseau (17) est un diplexeur.

9. Circuit d'entrée selon l'une des revendications précédentes 7 et 8, **caractérisé en ce que** le réseau (17) comporte un circuit diviseur de fréquence (19) à laquelle est raccordé un filtre passe-bas (18).

10. Circuit d'entrée selon la revendication précédente 9, **caractérisé en ce que** le circuit diviseur de fréquence (19) comporte au moins un filtre passe-bande et/ou au moins un filtre passe-haut et/ou au moins un filtre passe-bas (18).

11. Circuit selon l'une des revendications précédentes 7 à 10, **caractérisé en ce que** le réseau (17) comporte au moins deux lignes à haute fréquence λ/4 (3.X.4) dont la longueur est réglée sur au moins une fréquence à émettre ou à recevoir.

12. Circuit d'entrée selon la revendication précédente 11, **caractérisé en ce qu'**un filtre passe-bas (18) est monté en aval des lignes à haute fréquence λ/4 (3.4.X).

13. Circuit d'entrée selon l'une des revendications précédentes 1 à 12, **caractérisé en ce qu'**il est prévu au moins un autre commutateur HF (4.3.X), qui est monté en parallèle avec le commutateur HF (4.X.2), pour caler au moins un commutateur (23.X) sur une fréquence voisine.
